# EUROPEAN PATENT APPLICATION

(11) **EP 1 816 161 A1**
(43) Date of publication of application: **08.08.2007**
(21) Application number: 05809647.0
(22) Date of filing: 25.11.2005
(51) Int. Cl.: C08L 27/12, C08L 53/00, C09K 3/10, F16J 15/10

(54) **THERMOPLASTIC POLYMER COMPOSITION**

(30) Priority: 26.11.2004 JP 2004342772
(71) Applicant: DAIKIN INDUSTRIES, LTD., Osaka-shi, Osaka 530-8323 (JP)
(72) Inventor: MASUDA, Haruhisa c/o Yodogawa-seisakusho,, Settsu-shi, Osaka 5668585 (JP); OTANI, Mitsuhiro c/o Yodogawa-seisakusho,, Settsu-shi, Osaka 5668585 (JP); YANAGIGUCHI, Tomihiko c/o Yodogawa-seisakusho,, Settsu-shi, Osaka 5668585 (JP); ICHISAKA, Toshiki c/o Yodogawa-seisakusho,, Settsu-shi, Osaka 5668585 (JP)
(74) Representative: HOFFMANN EITLE
(86) International application number: PCT/JP2005/021667
(87) International publication number: WO 2006/057332

(57) **Abstract**

An object of the present invention is to provide a thermoplastic polymer composition which is flexible and capable of melt-molding and has excellent heat resistance and chemical resistance. Further object of the present invention is to provide a molded article, a sealing material, peripheral parts of fuel system, a fuel hose and a fuel container comprising the thermoplastic polymer composition. The present invention relates to a thermoplastic polymer composition comprising a fluororesin (A) containing a fluorine-containing ethylenic polymer (a), a crosslinked fluororubber (B) in which at least a part of at least one kind of fluororubber (b) is crosslinked, and a fluorine-containing thermoplastic elastomer (C).

## Description

### TECHNICAL FIELD

The present invention relates to a thermoplastic polymer composition comprising a fluororesin, a crosslinked fluororubber and a fluorine-containing thermoplastic elastomer, and a molded article, a sealing material, peripheral parts of fuel system, a fuel hose and a fuel container, which comprise the thermoplastic polymer composition.

### BACKGROUND ART

Fluororubbers are employed for various uses in the fields of automobiles, semiconductors and other industries, since the fluororubbers have excellent properties such as heat resistance, chemical resistance and low compression set.

On the other hand, fluororesins are employed in broad fields such as automobiles, industrial machines, office automation equipment and electrical and electronic equipment since fluororesins are excellent in properties such as sliding properties, heat resistance, chemical resistance, weather resistance and electrical properties.

For the purpose of improving heat resistance of fluororubbers or for the purpose of imparting flexibility to fluororesins, a polymer alloy of a fluororubber and a fluororesin has been studied. However, generally compatibility between a fluororubber and a fluororesin is poor, and simple melt-kneading of the fluororubber and the fluororesin only generates a dispersion defect, and problems such as peeling among layers and lowering of strength occur. In order to solve these problems, a particular fluorine-containing thermoplastic elastomer as a compatibilizer has been tried to be used as the third component (for example, see JP-2001-501982 and JP-A-6-25500).

However, the invention described in JP-2001-501982 has a problem that electron irradiation is required for exhibiting excellent performance, thus, the steps become complicated, and in the invention descried in JP-A-6-25500, a fluororesin is added for improving the cross-linked fluororubber and the whole of the obtained rubber composition is cross-linked, thus, the invention has a problem that the obtained fluororubber cannot be melt-molded and recycled any more.

### DISCLOSURE OF INVENTION

An object of the present invention is to provide a thermoplastic polymer composition which is flexible, is capable of melt-molding and has excellent heat resistance, chemical resistance, oil resistance, and fuel barrier property. Further, another object of the present invention is to provide a molded article, a sealing material, peripheral parts of fuel system, a fuel hose, and a fuel container, which comprise the thermoplastic polymer composition.

Namely, the present invention relates to a thermoplastic polymer composition comprising a fluororesin (A) comprising a fluorine-containing ethylenic polymer (a), a crosslinked fluororubber (B) in which at least a part of at least one kind of fluororubber (b) is cross-linked, and a fluorine-containing thermoplastic elastomer (C).

The crosslinked fluororubber (B) is preferably a rubber wherein the fluororubber (b) is cross-linked dynamically in the presence of the fluororubber (A), the fluorine-containing thermoplastic elastomer (C) and a crosslinking agent (D) under melting conditions.

A melting point of the fluorine-containing ethylenic polymer (a) is preferably 150° to 310°C.

It is preferable that the fluorine-containing thermoplastic elastomer (C) comprises at least one kind of elastomeric polymer segment (c-1) and at least one kind of non-elastomeric polymer segment (c-2), and at least either of the elastomeric polymer segment (c-1) and the non-elastomeric polymer segment (c-2) is a fluorine-containing polymer segment.

It is preferable that the fluorine-containing thermoplastic elastomer (C) comprises:
(1) a di-block polymer comprising one elastomeric polymer segment (c-1) and one non-elastomeric polymer segment (c-2), in which either of them is a fluorine-containing polymer segment; and/or
(2) a tri-block polymer comprising one elastomeric polymer segment (c-1) and two non-elastomeric polymer segments (c-2), and either of them is a fluorine-containing polymer segment.

It is preferable that the elastomeric polymer segment (c-1) is a copolymer of tetrafluoroethylene, vinylidene fluoride and hexafluoropropylene, and the non-elastomeric polymer segment (c-2) is a copolymer of tetrafluoroethylene and ethylene.

It is preferable that the fluororubber (b) is at least one kind of rubber selected from the group consisting of a vinylidene fluoride/hexafluoropropylene fluororubber, a vinylidene fluoride/tetrafluoroethylene/hexafluoropropylene fluororubber and a tetrafluoroethylene/propylene fluororubber.

It is preferable that the fluorine-containing ethylenic polymer (a) is at least one polymer selected from the group consisting of:
(a-1) a copolymer of tetrafluoroethylene and ethylene,
(a-2) a copolymer of tetrafluoroethylene and a perfluoro ethylenically unsaturated compound represented by the following formula (1):

   CF₂=CF-R_{f}¹ (1)

   wherein R_{f}¹ represents -CF₃ or -OR_{f}² and R_{f}² represents a perfluoroalkyl group having 1 to 5 carbon atoms,
(a-3) a copolymer comprising 19 to 90 % by mole of a tetrafluoroethylene unit, 9 to 80 % by mole of an ethylene unit and 1 to 72 % by mole of a perfluoro ethylenically unsaturated compound unit represented by the following formula (1):

   CF₂=CF-R_{f}¹ (1)

   wherein R_{f}1 represents -CF₃ or -OR_{f}² and R_{f}² represents a perfluoroalkyl group having 1 to 5 carbon atoms, and
(a-4) polyvinylidene fluoride.

It is preferable that the crosslinking agent (D) is at least one kind selected from the group consisting of organic peroxides, amine compounds and hydroxy compounds.

The thermoplastic polymer composition preferably has a structure in which the fluororesin (A) forms a continuous phase and the crosslinked fluororubber (B) forms a dispersion phase.

The crosslinked fluororubber (B) preferably has an average particle size of the dispersed rubbers of 0.01 to 30 µm.

The amount of the fluorine-containing thermoplastic elastomer (C) is preferably 2 to 100 parts by weight based on 100 parts by weight of the fluororesin (A).

The present invention also relates to a molded article, a sealing material, peripheral parts of fuel system, a single layer fuel hose and a single layer fuel container comprising the above described thermoplastic polymer composition.

The present invention further relates to a multilayer fuel hose and a multilayer fuel container having a layer comprising the above described thermoplastic polymer composition.

### BEST MODE FOR CARRYING OUT THE INVENTION

The present invention relates to the thermoplastic polymer composition comprising the fluororesin (A) comprising the fluorine-containing ethylenic polymer (a), the crosslinked fluororubber (B) in which at least a part of at least one kind of fluororubber (b) is cross-linked, and the fluorine-containing thermoplastic elastomer (C).

The fluororesin (A) is not particularly limited, and may be a fluororesin comprising at least one kind of fluorine-containing ethylenic polymer (a). The fluorine-containing ethylenic polymer (a) may be one having a structural unit derived from at least one kind of fluorine-containing ethylenic monomer. Examples of the fluorine-containing ethylenic monomer are perfluoroolefins such as tetrafluoroethylene and a perfluoro ethylenically unsaturated compound represented by the formula (1):

CF₂=CF-R_{f}¹ (1)

wherein R_{f}¹ is -CF₃ or -OR_{f}², and R_{f}² is a perfluoroalkyl group having 1 to 5 carbon atoms; and
fluoroolefins such as chlorotrifluoroethylene, trifluoroethylene, hexafluoroisobutene, vinylidene fluoride, vinyl fluoride, a compound represented by the formula (2):

CH₂=CX¹(CF2)nX² (2)

wherein X¹ is a hydrogen atom or a fluorine atom, X² is a hydrogen atom, a fluorine atom or a chlorine atom, and n is an integer of 1 to 10.

The fluorine-containing ethylenic polymer (a) may have a structural unit derived from a monomer copolymerizable with the above described fluorine-containing ethylenic monomers, and examples of such a monomer are non-fluorine- containing ethylenic monomers other than the above-mentioned fluoroolefins and perfluoroolefins. Examples of a non-fluorine-containing ethylenic monomer are ethylene, propylene and alkyl vinyl ethers. Herein, an alkyl vinyl ether refers to one having an alkyl group having 1 to 5 carbon atoms.

Of those, from the viewpoint that the obtained thermoplastic polymer composition is excellent in heat resistance, chemical resistance and oil resistance, and its molding becomes easy, the fluorine-containing ethylenic polymer (a) is preferably any one of:
(a-1) an ethylene-tetrafluoroethylene copolymer (ETFE) comprising tetrafluoroethylene and ethylene,
(a-2) a tetrafluoroethylene-perfluoro(alkyl vinyl ether) copolymer (PFA) comprising tetrafluoroethylene and a perfluoro ethylenically unsaturated compound represented by the formula (1):

   CF₂=CF-R_{f}¹ (1)

   wherein R_{f}¹ represents -CF₃ or -OR_{f}² and R_{f}² represents a perfluoroalkyl group having 1 to 5 carbon atoms or a tetrafluoroethylene-hexafluoropropylene copolymer (FEP),
(a-3) an ethylene-tetrafluoroethylene-hexafluoropropylene copolymer (Et-TFE-HFP copolymer) comprising tetrafluoroethylene, ethylene and a perfluoro ethylenically unsaturated compound represented by the formula (1):

   CF₂=CF-R_{f}¹ (1)

   wherein R_{f}¹ represents -CF₃ or -OR_{f}² and R_{f}² represents a perfluoroalkyl group having 1 to 5 carbon atoms, and
(a-4) polyvinylidene fluoride (PVDF). Favorable fluorine-containing ethylenic polymers of (a-1) to (a-4) are explained in the following.

### (a-1) ETFE

ETFE is preferable from the viewpoint of low fuel permeability and flexibility in addition to the above described effects. A molar ratio of a tetrafluoroethylene unit and an ethylene unit is preferably 20:80 to 90: 10, more preferably 62:38 to 90: 10, particularly preferably 63:37 to 80:20. Also, the third component may be contained and kind of the third component is not particularly limited as long as it is copolymerizable with tetrafluoroethylene and ethylene. As the third components, monomers represented by the following formulas:

CH₂=CX³R_{f}³, CF₂=CFR_{f}³, CF₂=CFOR_{f}³ and CH₂=C(R_{f}³)₂

wherein X³ is a hydrogen atom or a fluorine atom, and R_{f}³ is a fluoroalkyl group, can be used, and of those, a fluorine-containing vinyl monomer represented by CH₂=CX³R_{f}³ is more preferable and a monomer in which R_{f}³ has 1 to 8 carbon atoms is particularly preferable. Specific examples of the fluorine-containing vinyl monomer represented by the above formula are 1,1-dihydroperfluoropropene-1; 1,1-dihydroperfluorobutene-1; 1,1,5-trihydroperfluoropentene-1; 1,1,7-trihydroperfluoroheptene-1; 1,1,2-trihydroperfluorohexene-1; 1,1,2-trihydroperfluorooctene-1; 2,2,3,3,4,4,5,5-octafluoropentyl vinyl ether; perfluoro(methyl vinyl ether); perfluoro(propyl vinyl ether); hexafluoropropene, perfluoro-butene-1; 3,3,3-trifluoro-2-trifluoromethylpropene-1; 2,3,3,4,4,5,5-heptafluoro-1-pentene (CH₂=CFCF₂CF₂CF₂H); and the like.

A content of the third component is preferably 0.1 to 10 % by mole based on the fluorine-containing ethylenic polymer (a), more preferably 0.1 to 5 % by mole, particularly preferably 0.2 to 4 % by mole.

### (a-2) PFA or FEP

PFA or FEP is preferable since heat resistance is particularly excellent in the above described effects, and also low fuel permeability is exhibited in addition to the above described effects. More preferable is a fluorine-containing ethylenic polymer (a) comprising 90 to 99 % by mole of a tetrafluoroethylene unit and 1 to 10 % by mole of a perfluoro ethylenically unsaturated compound unit represented by the formula (1). Also, the fluorine-containing ethylenic polymer (a) comprising tetrafluoroethylene and a perfluoro ethylenically unsaturated compound represented by the formula (1) may contain the third component, and kind of the third component is not limited as long as the third component is copolymerizable with tetrafluoroethylene and a perfluoro ethylenically unsaturated compound represented by the formula (1).

### (a-3) Et-TFE-HFP copolymer

A Et-TFE-HFP copolymer is preferable from the viewpoint of low fuel permeability and flexibility in addition to the above described effects. More preferable is a fluorine-containing ethylenic polymer (a) comprising 19 to 90 % by mole of a tetrafluoroethylene unit, 9 to 80 % by mole of an ethylene unit and 1 to 72 % by mole of a perfluoro ethylenically unsaturated compound unit represented by the formula (1), and further preferable is a fluorine-containing ethylenic polymer (a) comprising 20 to 70 % by mole of a tetrafluoroethylene unit, 20 to 60 % by mole of an ethylene unit and 1 to 60 % by mole of a perfluoro ethylenically unsaturated compound unit represented by the formula (1).

The fluorine-containing ethylenic polymer (a) comprising tetrafluoroethylene, ethylene and the perfluoro ethylenically unsaturated compound represented by the formula (1) may contain an additional component, and examples of the additional component are 2,3,3,4,4,5,5-heptafluoro-1-pentene (CH₂=CFCF₂CF₂CF₂H) and the like.

A content of the additional component is preferably 0.1 to 3 % by mole based on the fluorine-containing ethylenic polymer (a).

### (a-4) PVDF

PVDF is preferable from the viewpoint of flexibility and excellent mechanical properties in addition to the above described effects.

A melting point of the fluorine-containing ethylenic polymer (a) is preferably 150° to 310°C, more preferably 150° to 290°C, further preferably 170° to 250°C. When the melting point of the fluorine-containing ethylenic polymer (a) is less than 150°C, heat resistance of the obtained thermoplastic polymer composition tends to decrease, and when it is more than 310°C, in the case of cross-linking the rubber (b) dynamically in the presence of the fluororesin (A), the crosslinking agent (D) and the fluorine-containing thermoplastic elastomer (C) under melting conditions, it is necessary to preset a melting temperature to not less than the melting point of the fluorine-containing ethylenic polymer (a), and in that case, the rubber (b) tends to deteriorate with heat.

The crosslinked fluororubber (B) used in the present invention is not particularly limited as long as at least a part of at least one kind of fluororubber (b) is cross-linked.

Examples of the fluororubber (b) are a perfluoro fluororubber (b-1) and a non-perfluoro fluororubber (b-2).

Examples of the perfluoro fluororubber (b-1) are a tetrafluoroethylene (hereinafter referred to as TFE) / perfluoro(alkyl vinyl ether) (hereinafter referred to as PAVE) copolymer, a TFE/hexafluoropropylene (hereinafter referred to as HFP)/PAVE copolymer and the like.

Examples of the non-perfluoro fluororubber (b-2) are, for instance, a vinylidene fluoride (hereinafter referred to as VdF) polymer, a TFE/propylene copolymer and the like, and these can be used alone or in an optional combination thereof to an extent not to impair the effects of the present invention.

The perfluoro fluororubbers and the non-perfluoro fluororubbers exemplified above shown by compositions of the main monomers, and a rubber in which a monomer for crosslinking and a modified monomer are copolymerized can also be favorably employed. As for a monomer for crosslinking and a modified monomer, known monomers for crosslinking such as monomers containing an iodine atom, a bromine atom and a double bond, a chain transfer agent, and modified monomers such as known ethylenically unsaturated compounds can be used.

Specific examples of the above described VdF polymers are a VdF/HFP copolymer, a VdF/TFE/HFP copolymer, a VdF/TFE/propylene copolymer, a VdF/ethylene/HFP copolymer, a VdF/TFE/PAVE copolymer, a VdF/PAVE copolymer, a VdF/chlorotrifluoroethylene (hereinafter referred to as CTFE) copolymer and the like. More specifically, preferable is a fluorine-containing copolymer comprising 25 to 85 % by mole of VdF and 75 to 15 % by mole of at least one kind of other monomer copolymerizable with VdF, and more preferable is a fluorine-containing copolymer comprising 50 to 80 % by mole of VdF and 50 to 20 % by mole of at least one kind of other monomer copolymerizable with VdF.

Herein, examples of at least one kind of other monomer copolymerizable with VdF are, for instance, fluorine-containing monomers such as TFE, CTFE, trifluoroethylene, HFP, trifluoropropylene, tetrafluoropropylene, pentafluoropropylene, trifluorobutene, tetrafluoroisobutene, PAVE and vinyl fluoride, and non-fluorine-containing monomers such as ethylene, propylene and alkyl vinyl ether. These can be used alone or in an optional combination thereof.

Of those fluororubbers, a fluororubber comprising a VdF unit is preferable from the viewpoint of heat resistance, compression set, processability and cost, and a fluororubber having a VdF unit and a HFP unit is more preferable from the viewpoint of excellent compression set.

At least one kind of rubber selected from the group consisting of a VdF/HFP fluororubber, a VdF/TFE/HFP fluororubber and a TFE/propylene fluororubber is preferable, and a VdF/TFE/HFP fluororubber is more preferable.

The fluororubber (b) preferably has an iodine atom or a bromine atom in its molecule from the viewpoint that peroxide cross-linking is possible.

The fluororubber (b) employed in the present invention can be prepared by a general emulsion-polymerization process. Polymerization conditions such as a temperature and time at polymerizing may be optionally determined depending on kind of a monomer and a desired elastomer.

The thermoplastic polymer composition of the present invention comprises the fluorine-containing thermoplastic elastomer (C), which can improve flowability and moldability of the composition, and further, can provide a molded article excellent in tensile strength at break and tensile elongation at break.

An uncrosslinked fluorine-containing thermoplastic elastomer is preferable as the fluorine-containing thermoplastic elastomer (C), and a part or the whole thereof may be cross-linked.

When at least one kind of uncrosslinked fluorine-containing thermoplastic elastomer at least a part of which is crosslinked is employed as the fluorine-containing thermoplastic elastomer (C), the uncrosslinked fluorine-containing thermoplastic elastomer can be cross-linked at the same time when the rubber (b) is cross-linked dynamically under melting conditions.

The fluorine-containing thermoplastic elastomer (C) is not particularly limited as long as it comprises at least one kind of elastomeric polymer segment (c-1) and at least one kind of non-elastomeric polymer segment (c-2), but at least either one of the elastomeric polymer segment (c-1) and the non-elastomeric polymer segment (c-2) is preferably a fluorine-containing polymer segment from the viewpoint of excellent compatibility of the fluororesin (A) with the crosslinked fluororubber (B).

The elastomeric polymer segment (c-1) imparts flexibility to the polymer, and its glass transition point is not more than 25°C, preferably not more than 0°C. Examples of its structural unit are, for instance, perhalo olefins such as tetrafluoroethylene, chlorotrifluoroethylene, hexafluoropropylene and a perfluorovinyl ether represented by the formula (3):

CF₂=CFO(CF₂CFX⁴O)ₚ-(CF₂CF₂CF₂O)_{q}-R_{f}⁴ (3)

wherein X⁴ represents a fluorine atom or -CF₃, R_{f}⁴ represents a perfluoroalkyl group having 1 to 5 carbon atoms, p is 0 or an integer of 1 to 5, and q is 0 or an integer of 1 to 5; fluorine containing monomers such as vinylidene fluoride, trifluoroethylene, trifluoropropylene, tetrafluoropropylene, pentafluoropropylene, trifluorobutene, tetrafluoroisobutene and vinyl fluoride; and non- fluorine-containing monomers such as ethylene, propylene and alkyl vinyl ether.

Examples of a monomer giving a cross-linking site are, for instance, an iodine- or bromine-containing monomer represented by the formula (4):

CX⁵₂=CX⁵-Rf⁵CHR¹X⁶ (4)

wherein X⁵ represents a hydrogen atom, a fluorine atom or -CH₃, Rf⁵ represents a fluoroalkylene group, a perfluoroalkylene group, a fluoropolyoxyalkylene group or a perfluoropolyoxyalkylene group, R¹ represents a hydrogen atom or -CH₃, and X⁶ represents an iodine atom or a bromine atom;
a monomer represented by the formula (5):

CF₂=CFO(CF₂CF(CF₃)O)ₘ(CF₂)ₙ-X⁷ (5)

wherein m is 0 or an integer of 1 to 5, n is an integer of 1 to 3, X⁷ represents a cyano group, a carboxyl group, an alkoxycarbonyl group, or a bromine atom; and the like, and these can be used alone or in an optional combination thereof.

Next, examples of structural unit for the non-elastomeric polymer segment (c-2) are perhalo olefins such as tetrafluoroethylene, chlorotrifluoroethylene, perfluoro(alkyl vinyl ether), hexafluoropropylene, a compound represented by the formula (6):

CF₂=CF(CF₂)ᵣX⁸ (6)

wherein r is an integer of 1 to 10, X⁸ represents a fluorine atom or a chlorine atom, and perfluoro-2-butene; partly-fluorinated olefins such as vinylidene fluoride, vinyl fluoride, trifluoroethylene, and a compound represented by the formula (7):

CH₂=CX⁹-(CF₂)ₛ-X⁹ (7)

wherein X⁹ represents a hydrogen atom and a fluorine atom, and s is an integer of 1 to 10, and CH₂=C(CF₃)₂; and
non-fluorine-containing monomers such as ethylene, propylene, vinyl chloride, vinyl ether, vinyl carboxylate ester and an acrylic acid.

In addition, of these, preferable is the fluorine-containing thermoplastic elastomer (C) comprising a copolymer of tetrafluoroethylene, vinylidene fluoride and hexafluoropropylene as the elastomeric polymer segment (c-1) and a copolymer of tetrafluoroethylene and ethylene as the non-elastomeric polymer segment (c-2), and more preferable is the fluorine-containing thermoplastic elastomer (C) comprising tetrafluoroethylene/vinylidene fluoride/hexafluoroprapylene as the elastomeric polymer segment (c-1) in a ratio of 0 to 35/40 to 90/5 to 50 % by mole, and tetrafluorocthylene/ethylene as the non-elastomeric polymer segment (c-2) in a ratio of 20 to 80/80 to 20 % by mole.

The fluorine-containing thermoplastic elastomer (C) is preferably a fluorine-containing multi-segmented polymer in which the elastomeric polymer segment (c-1) and the non-elastomeric polymer segment (c-2) are bonded in a blocked or grafted state in one molecule. The fluorine-containing thermoplastic elastomer (C) more preferably comprises:
(1) a di-block polymer comprising one elastomeric polymer segment (c-1) and one non-elastomeric polymer segment (c-2), wherein either of them is a fluorine-containing polymer segment, and/or
(2) a tri-block polymer comprising one elastomeric polymer segment (c-1) and two non-elastomeric polymer segments (c-2), wherein at least either of them is a fluorine-containing polymer segment, and the elastomer comprising the di-block polymer described in (1) is further more preferable.

For preparing the fluorine-containing thermoplastic elastomer (C), various known processes can be employed to obtain a fluorine-containing multi-segmented polymer by connecting the elastomeric polymer segment (c-1) and the non-elastomeric polymer segment (c-2) in a blocked or grafted state. Particularly, the process for preparing a block-type fluorine-containing multi-segmented polymer described in JP-B-58-4728 and the process for preparing a graft-type fluorine-containing multi-segmented polymer described in JP-A-62-34324 are preferably employed.

Particularly, from the viewpoint that a homogeneous and regular segmented polymer having high segmentation ratio (block ratio) can be obtained, preferable is the block-type fluorine-containing multi-segmented polymer synthesized by the so-called iodine transfer polymerization method described in JP-B-58-4728 and KOBUNSHI RONBUNSHU (Vol. 49, No. 10, 1992).

A preferable process for preparing the fluorine-containing thermoplastic elastomer (C) is an iodine transfer polymerization method which is known as a process for preparing a fluororubber. For example, there is a method of emulsion-polymerizing the above-mentioned perhalo olefin and when necessary, a monomer giving a cross-linking site in the presence of an iodine compound, preferably a diiodine compound, in an aqueous medium under pressure while stirring in the presence of a radical initiator in a substantially oxygen-free atmosphere. A represented example of the diiodine compound to be used is represented by the formula (8):

R²IₓBr_{y} (8)

wherein x and y are 0 or integers of 1 to 2 and 1 ≤ x + y ≤2 is to be satisfied, R² is a saturated or unsaturated fluorohydrocarbon group or chlorofluorohydrocarbon group having 1 to 16 carbon atoms or a hydrocarbon group having 1 to 3 carbon atoms, which may contain an oxygen atom, and the elastomer can be obtained in the presence of this compound. The iodine or bromine that is introduced in this way functions as a cross-linking site.

Examples of the compound represented by the formula (8) are, for instance, 1,3-diiodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodopcrfluorooctane, 1,12-diiodoperfluorododecane, 1,16-diiodaperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1- bromo-2-iodoperfluoroethane, 1 -bromo-3-iodoperfluoropropane, 1 -bromo-4-iodoperfluorobutane, 2-bromo-3-iodoperfluorobutane, 3-bromo-4-iodoperfluorobutene-1, 2-bromo-4-iodopernuorobutene-1, monoiodomonobromo-substituted benzene, diiodomonobromo-substituted benzene and (2-iodoethyl)- and (2-bromoethyl)-substituted benzene. These compounds may be used alone or can be used in a combination thereof.

Of these, from the viewpoint of polymerization reactivity, cross-linking reactivity and availability, 1,4-diiodoperfluorobutane and diiodomethane are preferably used.

The radical polymerization initiator used in the present invention may be the same as an initiator that has been used for polymerization of a fluorine-containing elastomer. Examples of such an initiator are organic and inorganic peroxides and azo compounds. Represented initiators are persulfates, percarbonates and peresters, and a preferable initiator is ammonium persulfate (APS). APS can be used alone or can be used in combination with reducing agents such as sulfites.

The emulsifier used for emulsion polymerization can be selected from a wide range, but from the viewpoint of inhibiting the chain transfer reaction to the emulsifier molecules that occurs during polymerization, salts of carboxylic acid having a fluorocarbon chain or a fluoropolyether chain are preferable. The amount of the emulsifier is preferably about 0.05 to 2 % by weight, particularly preferably 0.2 to 1.5 % by weight based on the added water.

The polymerization pressure can be varied in a wide range and is usually within the range of 0.5 to 5 MPa. The higher the polymerization pressure is, the higher the polymerization rate and therefore, from the viewpoint of improvement in productivity, the polymerization pressure is preferably not less than 0.8 MPa.

When the elastomeric polymer segment (c-1) of the fluorine-containing thermoplastic elastomer (C) is prepared by the above described iodine transfer polymerization method, its number average molecular weight is preferably 3,000 to 750,000, more preferably 5,000 to 300,000 from the viewpoint of imparting flexibility, elasticity and mechanical properties to the obtained entire fluorine-containing multi-segmented polymer.

The terminal of the elastomeric polymer segment (c-1) obtained in this way is a perhalo-type and has an iodine atom that is the initiation point for block copolymerization of the non-elastomeric polymer segment (c-2).

Next, block copolymerization of the non-elastomeric polymer segment (c-2) to the elastomeric polymer segment (c-1) can be conducted subsequently to the emulsion polymerization of the elastomeric polymer segment (c-1) by changing the monomer to those for the non-elastomeric polymer segment (c-2).

The number average molecular weight of the obtained non-elastomeric polymer segment (c-2) is preferably 1,000 to 1,200,000, more preferably 3,000 to 600,000 from the viewpoint of imparting heat resistance and mechanical properties to the thermoplastic polymer composition of the present invention.

In the fluorine-containing thermoplastic elastomer (C), the amount of polymer molecules comprising the elastomeric polymer segments (c-1) only, to which the non-elastomeric polymer segments (c-2) are not bonded, is preferably not more than 20 % by weight, more preferably not more than 10 % by weight based on the total amount of polymer molecules and segments in the fluorine-containing thermoplastic elastomer (C).

An amount of the fluorine-containing thermoplastic elastomer (C) is preferably 2 to 100 parts by weight, more preferably 5 to 80 parts by weight based on 100 parts by weight of the fluororesin (A). When the amount is less than 2 parts by weight, no effects of improvement in flowability, tensile strength at break and tensile elongation at break tend to appear, and when more than 100 parts by weight, heat resistance tends to decrease.

The thermoplastic polymer composition of the present invention is preferably obtained by dynamically crosslinking the rubber (b) under melting conditions in the presence of the fluororesin (A), the crosslinking agent (D) and the fluorine-containing thermoplastic elastomer (C). Herein, dynamically cross-linking means cross-linking the rubber (b) dynamically by using a banbury mixer, a pressurizing kneader, an extruder or the like at the same time as melt-kneading. Of these, an extruder such as a twin screw extruder is preferable from the viewpoint that high shear strength can be applied. By treating with cross-linking dynamically, the phase structure of the fluororesin (A) and the crosslinked fluororubber (B) and dispersion of the crosslinked rubber (B) can be controlled.

The crosslinking agent (D) can be optionally selected depending on kind of the rubber (b) to be crosslinked and melt-kneading conditions.

A crosslinking system that is used in the present invention can be optionally selected depending on kind of a crosslinkable group (cure site) or uses of the obtained molded article, when the fluororubber (b) has a crosslinkable group (cure site). Any of polyol crosslinking system, organoperoxide crosslinking system and polyamine crosslinking system can be adopted as the crosslinking system.

Herein, crosslinking by the polyol crosslinking system is suitable because of features that a carbon-oxygen bond is contained at a crosslinking site, compression set is small, and moldability and sealing properties are excellent.

When crosslinking by the organoperoxide crosslinking system, since a carbon-carbon bond is contained at a crosslinking site, there are features that chemical resistance and steam resistance are excellent as compared with the polyol crosslinking system having a carbon-oxygen bond at a crosslinking site and the polyamine crosslinking system having a carbon-nitrogen double bond at a crosslinking site.

When crosslinking by the polyamine crosslinking system, a carbon-nitrogen double bond is contained at a crosslinking site, and there is a feature that dynamic mechanical properties are excellent. However, compression set tends to become large as compared with the cases of crosslinking by using crosslinking agent of polyol crosslinking system and organoperoxide crosslinking system.

Therefore, in the present invention, it is preferable to use a crosslinking agent for polyol crosslinking system or organoperoxide crosslinking system, and it is more preferable to use a crosslinking agent for polyol crosslinking system from the viewpoint of excellent sealing properties as descried above.

A crosslinking agent for polyamine, polyol or organoperoxide crosslinking system can be used in the present invention.

Examples of the polyamine crosslinking agent are, for instance, polyamine compounds such as hexamethylenediamine carbamate, N,N'-dicinnamylidene-1,6-hexamethylenediamine and 4,4'-bis(aminocyclahexyl)methane carbamate. Of those, N,N'-dicinnamylidene-1,6-hexamethylenediamine is preferable.

Compounds known as a crosslinking agent for fluororubbers can be used as a polyol crosslinking agent, and, for example, polyhydroxy compounds, specifically, polyhydroxy aromatic compounds are suitably used from the viewpoint of excellent heat resistance.

The above mentioned polyhydroxy aromatic compound is not particularly limited, and examples thereof are, for instance, 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluoradichloropropane, 4,4'-dihydraxydiphenylsulfone, 4,4'-dihydroxydiphenylketane, tri(4-hydroxyphenyl)methane, 3,3',5,5'-tetrachlorobisphenol A, 3,3',5,5'-tetrabromobisphenol A and the like. These polyhydroxy aromatic compounds may be alkali metal salts, alkali earth metal salts etc., but when a copolymer is coagulated by using an acid, it is preferable not to use the above mentioned metal salts.

A crosslinking agent for organoperoxide crosslinking system may be an organic peroxide which can generate peroxy radicals easily in the presence of heat or oxidation-reduction system, and specifically, examples are 1,1-bis(t-butylperoxy)-3,5,5-trimethylcyclohexane, 2,5-dimethylhexane-2,5-dihydroperoxide, di-t-butylperoxide, t-butylcumylperoxide, dicumylperoxide, α,α-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoylperoxide, t-butylperoxybenzene, t-butylperoxy maleic acid, t-butylperoxyisopropyl carbonate and the like. Of those, 2,5-dimethyl-2,5-di(t-butylperoxy)hexane is preferable.

Among those, polyhydroxy compounds are preferable from the viewpoint that compression set of the obtained molded article etc. is small, and moldability and sealing properties are excellent, and polyhydroxy aromatic compounds are more preferable from the viewpoint that heat resistance is excellent, and bisphenol AF is further preferable.

In the polyol crosslinking system, a crosslinking accelerator is generally used along with a polyol crosslinking agent. When using the crosslinking accelerator, a crosslinking reaction can be accelerated by accelerating formation of a double bond in a molecule in a reaction of removing hydrofluoric acid at a trunk chain of a fluororubber.

As for the crosslinking accelerator in the polyol crosslinking system, onium compounds are generally employed. Onium compounds are not particularly limited, and examples thereof are, for instance, ammonium compounds such as quaternary ammonium salts, phosphonium compounds such as quaternary phosphonium salts, oxonium compounds, sulfonium compounds, cyclic amine, and monofunctional amine compounds. Of those, quaternary ammonium salts and quaternary phosphonium salts are preferable.

Quaternary ammonium salts are not particularly limited, and examples thereof are, for instance, 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methyl sulfate, 8-ethyl-1,8-diazabicyclo[5.4.0]-7-undecenium bromide, 8-propyl- 1,8-diazabicyclo[5.4.0]-7-undecenium bromide, 8-dodecyl-1,8-diazabicyclo[5.4.0]-7-undecenium chloride, 8-dodecyl-1, 8-diazabicyclo[5.4.0]-7-undecenium hydroxide, 8-eicosyl- 1,8-diazabicyclo[5.4.0]-7-undecenium chloride, 8-tetracosyl-1,8-diazabicyclo[5.4.0]-7-undecenium chloride, 8-benzyl-1,8-diazabiCyclo[5.4.0]-7-undecenium chloride (hereinafter referred to as DBU-B), 8-benzyl-1,8-diazabzcyclo[5.4.0]-7-undecenium hydroxide, 8-phenethyl-1,8-diazabicyclo[5.4.0]-7-undecenium chloride, 8-(3-phenylpropyl)-1,8-diazabicyclo[5.4.0]-7-undecenium chloride and the like. Of those, DBU-B is preferable from the viewpoint of crosslinkability and physical properties of a cross-linked article.

Quaternary phosphonium salts are not particularly limited, and examples thereof are, for instance, tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, benzylphenyl(dimethylamino)phosphonium chloride and the like. Of those, benzyltriphenylphosphonium chloride (BTPPC) is preferable from the viewpoint of crosslinkability and properties of a crosslinked article.

In addition, a solid solution of quaternary ammonium salts or quaternary phosphonium salts and bisphenol AF, and a chlorine-free crosslinking accelerator disclosed in JP-A-11-147891can be employed as a crosslinking accelerator.

Examples of a crosslinking accelerator for an organoperoxide crosslinking system are, for instance, triallylcyanurate, triallylisocyanurate(TAIC), triacrylformal, triallyl trimellitate, N,N'-m-phenylenebismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallylphosphoramide, N,N,N',N'-tetraallylphthalamide, N,N,N',N'-tetraallylmaronamide, trivinylisocyanurate, 2,4,6-trivinylmethyltrisiloxane, tri(5-norbornene-2-methylene)cyanurate, triallylphosphite and the like. Among those, triallylisocyanurate (TAIC) is preferable from the viewpoint of crosslinkability and physical properties of a crosslinked article.

An amount of the crosslinking agent (D) is preferably 0.1. to 10 parts by weight based on 100 parts by weight of the fluororubber (b), and more preferably 0.3 to 5 parts by weight. When the amount of the crosslinking agent (D) is less than 0. 1 part by weight, crosslinking of the fluororubber (b) is not sufficiently facilitated, and heat resistance and oil resistance of the obtained thermoplastic polymer composition tend to decrease, and when more than 10 parts by weight, moldability of the obtained thermoplastic polymer composition tends to decrease.

Under melting conditions means under a temperature where the fluororesin (A), the fluororubber (b) and the fluorine-containing thermoplastic elastomer (C) are melted. The melting temperature varies depending on glass transition temperatures and/or melting points of the respective fluororesin (A), fluororubber (b) and fluorine-containing thermoplastic elastomer (C), and is preferably 120° to 330°C, more preferably 130° to 320°C. When the temperature is less than 120°C, dispersion between the fluororesin (A) and the fluororubber (b) tends to be rough, and when more than 330°C, the rubber (b) tends to deteriorate with heat.

The obtained thermoplastic polymer composition can have a structure in which the fluororesin (A) forms a continuous phase and the crosslinked rubber (B) forms a dispersion phase, or a structure in which the fluororesin (A) and the crosslinked rubber (B) form a co-continuous phase. Of these, it is preferable for the composition to have a structure in which the fluororesin (A) forms a continuous phase and the crosslinked rubber (B) forms a dispersion phase.

Even when the fluororubber (b) forms a matrix at an initial stage of dispersion, a melt-viscosity is increased because the fluororubber (b) becomes the crosslinked rubber (B) with progress of the crosslinking reaction, and as a result, the crosslinked rubber (B) becomes a dispersion phase, or forms a co-continuous phase together with the fluororesin (A).

When such a structure is formed, the thermoplastic polymer composition of the present invention exhibits excellent heat resistance, chemical resistance and oil resistance and has excellent moldability. An average particle size of the dispersed rubbers of the crosslinked fluororubber (B) is preferably 0.01 to 30 µm, more preferably 0.1 to 10 µm, When the average particle size is less than 0.01 µm, flowability tends to lower, and when more than 30 µm, strength of the obtained thermoplastic polymer composition tends to decrease.

The preferred embodiment of the thermoplastic polymer composition of the present invention is the structure in which the fluororesin (A) forms a continuous phase and the crosslinked rubber (B) forms a dispersion phase. Also, a co-continuous phase of the fluororesin (A) with the crosslinked rubber (B) may be contained in the structure partly.

An average particle size of the dispersed rubbers of the crosslinked fluororubber (B) in the thermoplastic polymer composition of the present invention can be confirmed by any of AFM, SEM or TEM, or by a combination thereof. For example, in the case of using AFM, the difference obtained from the surface information of the fluororesin (A) of a continuous phase and the crosslinked fluororubber (B) of a dispersion phase is obtained as an image of contrast, and it is possible to binarize tone-categorizing of the tone. Images having clear contrast can be obtained by regarding a center position of tone-categorizing as the binarizing position. The particle size of the crosslinked rubbers in the dispersion phase can be measured. In the case of using SEM, a particle size of the crosslinked rubbers in the dispersion phase can be measured by processing images with emphasizing contrast, controlling tone, or a combination thereof in such a way that the crosslinked fluororubber (B) in the dispersion phase becomes clear against the images obtained by reflection electron image like the case of AFM. In the case of TEM, a particle size of the crosslinked rubbers in the dispersion phase can be measured by processing images with emphasizing contrast, controlling tone, or a combination thereof like the cases of AFM and SEM. More suitable method can be selected from these methods depending on the respective thermoplastic polymer compositions.

The thermoplastic polymer composition of the present invention comprises 10 to 95 % by weight of the fluororesin (A) and 90 to 5 % by weight of the crosslinked fluororubber (B), and it is preferable that the fluororesin (A) is 20 to 80 % by weight, and the crosslinked fluororubber (B) is 80 to 20 % by weight, and more preferably the fluororesin (A) is 30 to 70 % by weight, and the crosslinked fluororubber (B) is 70 to 30 % by weight. When the fluororesin (A) is less than 10 % by weight, flowability of the obtained thermoplastic polymer composition becomes poor and moldability tends to lower, and when more than 95 % by weight, flexibility of the obtained thermoplastic polymer composition tends to decrease.

A melt flow rate (MFR) of the thermoplastic polymer composition of the present invention is preferably 0.5 to 30 g/10 min, more preferably 1 to 25 g/10 min. When MFR is less than 0.5 g/10 min, flowability becomes poor and moldability tends to decrease. The measurement of MFR was carried out by using a melt flow rate measurement device made by Toyo Seiki Seisaku-sho, Ltd. under the conditions of 297°C and a load of 5,000 g.

Considering utilizing for peripheral parts of fuel system, the thermoplastic polymer composition of the present invention preferably has fuel permeability of 0.1 to 20 g · mm/m² · day, more preferably 0.2 to 18 g · mm/m² · day. The measurement of fuel permeability was carried out by employing CE 10 (toluene/isooctane/ethanol=45/45/10 vol %) as an imitation fuel with the Cup method.

Also, to the thermoplastic polymer composition of the present invention, polymers such as polyethylene, polypropylene, polyamide, polyester and polyurethane, inorganic fillers such as calcium carbonate, talc, clay, titanium oxide, carbon black and barium sulfate, a pigment, a flame retardant, a lubricant, a photo-stabilizer, a weather resistance stabilizer, an antistatic agent, a ultraviolet absorber, an antioxidant, a mold-releasing agent, a foaming agent, aroma chemicals, oils, a softening agent, etc. can be added to an extent not to affect the effect of the present invention.

The thermoplastic polymer composition of the present invention can be molded by using a general molding process and molding device. As for molding processes, optional processes, for example, injection molding, extrusion molding, compression molding, blow molding, calendar molding and vacuum molding can be adopted, and the thermoplastic polymer composition of the present invention is molded into a molded article in an optional shape according to an intended purpose.

Further, the present invention relates to the molded article obtained by using the thermoplastic polymer composition of the present invention, and the molded article encompasses a molded article in the form of sheet or film, and also a laminated article having a layer comprising the thermoplastic polymer composition of the present invention and a layer comprising other material.

In the laminated article having at least one layer comprising the thermoplastic polymer composition of the present invention and at least one layer comprising other material, appropriate material may be selected as the other material according to required properties and intended applications. Examples of the other material are, for instance, thermoplastic polymers such as polyolefin (for instance, high-density polyethylene, middle-density polyethylene, low-density polyethylene, linear low-density polyethylene, ethylene-propylene copolymer and polypropylene), nylon, polyester, vinyl chloride resin (PVC) and vinylidene chloride resin (PVDC), crosslinked rubbers such as ethylene-propylene-diene rubber, butyl rubber, nitrile rubber, silicone rubber and acrylic rubber, metals, glass, wood, ceramics, etc.

In the molded article having the laminated structure, a layer of an adhesive agent may be inserted between the layer comprising the thermoplastic polymer composition of the present invention and the substrate layer comprising other material. The layer comprising the thermoplastic polymer composition of the present invention and the substrate layer comprising other material can be adhered strongly and integrated by inserting a layer of an adhesive agent. Examples of the adhesive agent used in the layer of the adhesive agent are a diene polymer modified with acid anhydride; a polyolefin modified with acid anhydride; a mixture of a high molecular weight polyol (for example, polyester polyol obtained by polycondensation of a glycol compound such as ethylene glycol or propylene glycol with a dibasic acid such as adipic acid; a partly-saponified compound of a copolymer of vinyl acetate and vinyl chloride; or the like) and a polyisocyanate compound (for example, a reaction product of a glycol compound such as 1,6-hexamethylene glycol and a diisocyanate compound such as 2,4-tolylene diisocyanate in a molar ratio of 1 to 2; a reaction product of a triol compound such as trimethylolpropane and a diisocyanate compound such as 2,4-tolylenediisocyanate in a molar ratio of 1 to 3; or the like); and the like. Also, known processes such as co-extrusion, co-injection and extrusion coating can be used for forming a laminated structure.

The present invention encompasses a fuel hose or a fuel container comprising a single layer of the thermoplastic polymer composition of the present invention. The use of the fuel hose is not particularly limited, and examples thereof are a filler hose, an evaporation hose and a breezer hose for an automobile. The use of the fuel container is not particularly limited, and examples thereof are a fuel container for an automobile, a fuel container for a two-wheel vehicle, a fuel container for a small electric generator, a fuel container for lawn mower and the like.

Also, the present invention encompasses a multilayer fuel hose or a multilayer fuel container comprising a layer of the thermoplastic polymer composition of the present invention. The multilayer fuel hose or the multilayer fuel container comprises the layer comprising the thermoplastic polymer composition of the present invention and at least one layer comprising the other material, and these layers are mutually adhered through or without the layer of the adhesion layer.

Examples of the layer of the other material are a layer comprising a rubber other than the thermoplastic polymer composition of the present invention and a layer comprising a thermoplastic resin.

Examples of the rubber are preferably at least one rubber selected from the group consisting of an acrylonitrile-butadiene rubber or a hydrogenated rubber thereof, a blend rubber of acrylonitrile-butadiene rubber and polyvinyl chloride, a fluororubber, an epichlorohydrin rubber and an acrylic rubber from the viewpoint of chemical resistance and flexibility. It is more preferable that the rubber is at least one rubber selected from the group consisting of an acrylonitrile-butadiene rubber or a hydrogenated rubber thereof, a blend rubber of acrylonitrile-butadiene rubber and polyvinyl chloride and a fluororubber.

The thermoplastic resin is preferably a thermoplastic resin comprising at least one selected from the group consisting of a fluororesin, a polyamide resin, a polyolefin resin, a polyester resin, a poly(vinyl alcohol) resin, a polyvinyl chloride resin and a poly(phenylene sulfide) resin from the viewpoint of fuel barrier property. It is more preferable that the thermoplastic resin is a thermoplastic resin comprising at least one selected from the group consisting of a fluororesin, a polyamide resin, a poly(vinyl alcohol) resin and a poly(phenylene sulfide) resin.

The fuel hose or the fuel container comprising a layer of the above described thermoplastic polymer composition of the present invention and a layer of other rubber or other thermoplastic resin is not particularly limited, and examples thereof are fuel hoses such as a filler hose, an evaporation hose and a breezer hose for an automobile; and fuel containers such as a fuel container for an automobile, a fuel container for a two-wheel vehicle, a fuel container for a small electric generator and a fuel container for lawn mower.

Among these, preferable as a fuel hose comprising a layer of the thermoplastic polymer composition of the present invention and a layer of the other rubber are a fuel hose composed of three layers of an outer layer comprising an acrylonitrile-butadiene rubber or a hydrogenated rubber thereof, or a blend rubber of acrylonitrile-butadiene rubber and polyvinyl chloride, a middle layer comprising the thermoplastic polymer composition of the present invention and an inner layer comprising a fluororubber, or a fuel hose composed of two layers of an outer layer comprising an acrylonitrile-butadiene rubber or a hydrogenated rubber thereof, or a blend rubber of acrylonitrile-butadiene rubber and polyvinyl chloride, and an inner layer comprising the thermoplastic polymer composition of the present invention from the viewpoint of excellent fuel barrier property, flexibility and chemical resistance.

The thermoplastic polymer composition of the present invention and the molded article obtained from the composition are suitably employed in the fields described below.

In the semiconductor-related field such as a semiconductor manufacturing device, a liquid crystal panel manufacturing device, a plasma panel manufacturing device, a plasma address liquid crystal panel, a field emission display panel and a substrate of a solar battery, examples of applications are an ○ (square) ring, a packing, a sealing material, a tube, a roll, a coating, a lining, a gasket, a diaphragm and a hose, and these can be used for a CVD device, a dry etching equipment, a wet etching equipment, an oxidization dispersion diffuser, a sputtering equipment, an ashing equipment, a wet scrubber, an ion implanter, an exhauster, a chemical piping and a gas piping. Specific examples of the applications are an O-ring and a sealing material for a gate valve, an O-ring and a sealing material for a quartz window, an O ring and a sealing material for a chamber, an O-ring and a sealing material for a gate, an O-ring and a sealing material for a bell jar, an O-ring and a sealing material for a coupling, an O-ring, a sealing material and a diaphragm for a pump, an O-ring and a sealing material for a semiconductor gas regulator, an O-ring and a sealing material of a resist developing solution and a releasing solution, a hose and a tube for a wafer washing solution, a roll for a wafer transport, a lining and a coating for a resist developing solution vessel and a releasing solution vessel, a lining and a coating for a wafer washing vessel and a lining and a coating for a wet etching vessel. Furthermore, examples of uses thereof are a sealant, sealing agent, a coating of quartz for an optical fiber, a potting, a coating and an adhesive seal for an electronic parts and a circuit board for the purpose of insulation, vibration proof, water proof and damp proof, a gasket for magnetic storage, a modifier for a sealant material such as epoxy and a sealant for a clean room and clean facility.

In the field of automobiles, a gasket, a shaft seal, a valve stem seal, a sealing material or a hose can be employed for an engine and its peripheral equipment, a hose and a sealing material are used for an AT equipment, and an O (square) ring, a tube, a packing, a core material of a valve, a hose, a sealing material and a diaphragm can be employed for a fuel system and its peripheral equipment. Concretely, examples are an engine head gasket, a metal gasket, a sump gasket, a crank shaft seal, a cam shaft seal, a valve stem seal, a manifold packing, an oil hose, a seal for an oxygen sensor, an ATF hose, an injector O-ring, an injector packing, a fuel pump O-ring, a diaphragm, a fuel hose, a crank shaft seal, a gear box seal, a power piston packing, a seal for a cylinder liner, a seal for a valve stem, a front pump seal of an automatic gear, a rear axle pinion seal, a gasket of an universal joint, a pinion seal of a speedometer, a piston cup of a foot brake, an O-ring of torque transmission, an oil seal, a seal for an exhaust gas reheating equipment, a bearing seal, an EGR tube, a twin carburetor tube, a diaphragm for a sensor of a carburetor, a vibration-proof rubber (an engine mount, an exhaust outlet), a hose for a reheating equipment and an oxygen sensor bush.

In the field of aircraft, rockets and, ships and vessels, examples are a diaphragm, an O (square) ring, a valve, a tube, a packing, a hose and a sealing material, and these can be employed for a fuel system. Concretely, in the field of an aircraft, there are a jet engine valve stem seal, a fuel feeding hose, a gasket and an O-ring, a rotating shaft seal, a gasket of a hydraulic machine and a seal for a fire resisting wall, and in the field of ships and vessels, there are a stern seal for a propeller shaft of a screw, a suction and exhaust valve stem seal for a diesel engine, a valve seal of a butterfly valve, and a stem seal for a butterfly valve.

In the field of chemical products in a chemical plant, examples are a lining, a valve, a packing, a roll, a hose, a diaphragm, an O (square) ring, a tube, a sealing material and a chemical resistance coating, and these can be employed for processes of manufacturing chemicals such as medicine, agricultural chemicals, coating and resin. Concretely, examples are a seal of a pump for chemicals, a flow indicator and a pipe, a seal of heat exchanger, a packing for a glass condenser of sulfuric acid manufacturing equipment, a seal of an agricultural chemicals dusting machine and transport pump, a seal of gas piping, a seal for a plating solution, a packing of a high temperature vacuum dryer, a roller seal of a belt for paper making, a seal of a fuel battery, a joint seal of air duct, a trichlene resistance roll (for fiber dyeing), an acid resistance hose (for concentrated sulfuric acid), a packing of a tube connecting part of gas chromatography and a pH meter, a chloride gas transport hose, a rain water drain hose of a benzene or toluene storage tank, and a seal, a tube, a diaphragm and a valve of an analytical equipment and a physical and chemical equipment.

In the field of chemicals such as medical drugs, the molded article of the present invention can be employed as a plug for chemicals.

In the field of photography such as a developing equipment, in the field of printing such as printing machinery, and in the field of coating such as coating facility, examples are rolls, and each of them can be employed as a roll for a film developing machine and X-ray film developing machine, a printing roll and a coating roll. Concretely, examples are a developing roll of a film developing machine-and X-ray film developing machine, a gravure roll and a guide roll of a printing roll, a gravure roll of a coating roll of a magnetic tape manufacture coating line, a guide roll of a magnetic tape manufacture coating line, and various coating rolls. Furthermore, examples are a seal of a xerography machine, a printing roll, a scraper, a tube and a part of a valve of a printing equipment, a coating roll, a scraper, a tube and a part of a valve of coating facility, an ink tube, a roll and a belt of a printer, a belt and a roll of a xerography machine, and a roll and a belt of a printing machine.

Also, a tube can be used in the field of analytical equipment and physical and chemical equipment.

In the field of food plants, examples are a lining, a valve, a packing, a roll, a hose, a diaphragm, an O (square) ring, a tube, a sealing material and a belt, and these can be used in a process of manufacturing food. Concretely, these are used as a seal for a plate heat exchanger and a seal of an electromagnetic valve for a vending machine.

In the field of atomic power plant equipment, examples are a packing, an O-ring, a hose, a sealing material, a diaphragm, a valve, a roll and a tube.

In the field of steel making such as an iron plate processing facility, an example is a roll which is used as a roll for an iron plate processing and the like.

In the field of general industries, examples are a packing, an O-ring, a hose, a sealing material, a diaphragm, a valve, a roll, a tube, a lining, a mandrel, an electric cable, a flexible joint, a belt, a rubber plate, a weather strip, and a roll, a roll blade and a belt for a PPC copying machine. Concretely, there are a seal of a hydraulic lubricating machine, a bearing seal, a seal for a window and other parts of a dry cleaning equipment, a seal for an uranium hexafluoride condenser, a sealing (vacuum) valve for a cyclotron, a seal for an automatic packaging machine, a diaphragm for a pump for analyzing a sulfurous acid gas and chlorine gas (a pollution-related measuring device), a roll, a belt and a squeezing roll for acid cleaning of a printing machine.

In the field of electricity, concretely, examples are an insulating oil cap for a bullet train, a benching seal for a liquid ring transformer, and a jacket for an oil well cable.

In the field of fuel batteries, concretely, examples are a sealing material between an electrode and a separator, and a seal for a hydrogen-oxygen-purified water piping.

In the field of electronic components, specific examples are a starting material of a heat releasing material, a starting material of an electromagnetic waves shield material, a modifier for a print circuit board pre-preg plastic such as an epoxy, a scatter-proof material for a bulb, and a gasket for a hard disc drive of a computer.

Products usable for molding application at site are not particularly limited, and examples are a coating agent of metal gasket for an automobile engine, a gasket of an oil pan of engine, a roll for a copying machine and a printer, a sealing agent for architecture, a gasket of a magnetic recording device, a sealing agent of a filter unit for a clean room, a coating agent of a printing substrate, a fixing agent of electrical and electronic parts, insulating moisture-proof treatment of a lead wire terminal of electric devices, a seal of an oven such as electric furnace, terminal treatment of a sheathed heater, widow frame seal of a microwave oven, adhesion of CRT wedge and neck, adhesion for installation of automobile electric equipment, and a joint seal of kitchen, bath room, a rest room, etc.

The molded article of the present invention can be suitably used in various applications descried above, and is particularly suitable for peripheral parts of fuel system. The molded article of the present invention is useful particularly as a sealing material, a packing, a roller, a tube or a hose.

### EXAMPLES

Then, the present invention is explained by means of Examples, but is not limited thereto.

### <Hardness>

The pellets of the thermoplastic polymer compositions prepared in Examples and Comparative Examples are compression-molded by a thermal pressing machine under the conditions of 260°C and 5 MPa to prepare 2 mm thick sheet-like test pieces, and a hardness A is measured by employing those sheets, according to JIS-K6301.

### <Compression set>

The pellets of the thermoplastic polymer compositions prepared in Examples and Comparative Examples are compression-molded by a thermal pressing machine under the conditions of 260°C and 5 MPa to prepare 2 mm and 0.7 mm thick sheet-like test pieces. Those sheet-like test pieces are overlapped to form a column having a diameter of 29.0 mm and a thickness of 12.7 mm and compression set is measured after allowing to stand under the conditions of a temperature of 150°C and a compression deformation amount of 25% for 22 hours, according to JIS-K630 1.

### <Tensile strength at break and tensile elongation at break>

The pellets of the thermoplastic polymer compositions prepared in Examples and Comparative Examples are compression-molded by a thermal pressing machine under the condition of 260°C and 5 MPa to prepare 2 mm thick sheet-like test pieces, and then, the test pieces are cut into a shape of dumbbell with a thickness of 2 mm and a width of 5 mm. By employing the obtained dumbbell-shaped test pieces, tensile strength at break and tensile elongation at break at 23°C are measured by using an Autograph (made by SHIMADZU CORPORATION) under the condition of 50 mm/min, according to JIS-K6301.

### <Fuel permeability>

The pellets of the thermoplastic polymer compositions prepared in Examples and Comparative Examples are compression-molded by a thermal pressing machine under the condition of 260° C and 5 MPa to prepare 2 mm thick sheet-like test pieces. The sheet-like test pieces are cut into disk-like sheets having a diameter of 10 cm, and a permeation amount of CE10 (toluene/isooctane/ethanol=45/45/10 vol%) at 40°C is measured by Cup method according to JIS-Z0208.

### <Flowability>

A melt-flow rate (MFR) is measured by a melt-flow measurement device under the conditions of 297°C and a load of 5,000 g by employing the pellets of the thermoplastic polymer compositions prepared in Examples and Comparative Examples.

In Examples and Comparative Examples, the following fluorine-containing ethylenic polymer (a), fluororubber (b), fluorine-containing thermoplastic elastomer (C) and crosslinking agent (D) are used.

### <Fluorine-containing ethylenic polymer (a)>

Tetrafluoroethylene-ethylene copolymer (TFE:ET=50:50 mol%, melting point: 220°C, MFR at 297°C at a load of 5,000 g: 30g/10min).

### <Fluororubber (b)>

Two-component rubber comprising vinylidene fluoride (VdF) and hexafluoropropylene (HFP) (VdF:HFP=78:22 mol%, Mooney viscosity at 121°C : 41, MFR at 297°C at a load of 5,000 g: 28g/10min).

### < Fluorine-containing thermoplastic elastomer (C)>

Tri-block copolymer comprising (tetrafluoroethylene-ethylene copolymer segment)-(vinylidene fluoride-tetrafluoroethylene-hexafluoropropylene copolymer segment)-(tetrafluoroethylene-ethylene copolymer segment) (MFR at 29'7°C at a load of 5,000 g: 26 g/ 10 min).

A ratio of tetrafluoroethylene and ethylene in the tetrafluoroethylene-ethylene copolymer segment is 50:50 % by mole.

A ratio of vinylidene fluoride, tetrafluoroethylene and hexafluoropropylene in the vinylidene fluoride-tetrafluoroethylene-hexafluoropropylene copolymer segment is 50:30:20 % by mole.

### <Crosslinking agent (D)>

Polyol crosslinking agent: 2,2-bis(4-hydroxyphenyl)perfluoropropane ("Bisphenol AF" available from DAIKIN INDUSTRIES, LTD.).

### EXAMPLES 1 to 6

The above-described fluorine-containing ethylenic copolymer (a), rubber (b), fluorine-containing thermoplastic elastomer (C) and crosslinking agent (D) were pre-mixed in amounts shown in Table 1, and then the mixture was supplied in a twin screw extruder and melt-kneaded under the conditions of a cylinder temperature of 250°C and a rotation speed of a screw of 100 rpm to prepare pellets of the respective thermoplastic polymer compositions.

It was found from morphology observation with a scanning electron microscope (made by JEOL Ltd.) that the thermoplastic polymer compositions obtained in Examples 1 to 6 have a structure in which the fluororubber (A) forms a continuous phase and the crosslinked fluororubber (B) forms a dispersion phase.

By employing the obtained pellets of thermoplastic polymer compositions, hardness, tensile strength at break, tensile elongation at break and compression set were measured, and MFR and fuel permeability were evaluated by the above methods, and results of the measurements and evaluation are shown in Table 1.

### COMPARATIVE EXAMPLE 1

By employing pellets of fluororesin (A) solely, measurements of hardness, compression set, tensile strength at break, tensile elongation at break, an average particle size of dispersed rubbers and fuel permeability were conducted in the same manner as in Example 1 and results of the measurements are shown in Table 1.

### COMPARATIVE EXAMPLE 2

After pre-mixing the crosslinking agent (D) in an amount of 2.17 parts by weight based on 100 parts by weight of the fluororubber (b), the mixture was supplied in a twin screw extruder and melt-kneaded under the conditions of a cylinder temperature of 250°C and a rotation speed of a screw of 100 rpm to prepare pellets of the respective thermoplastic polymer compositions.

By employing the obtained pellets of the thermoplastic polymer composition, hardness, tensile strength at break, tensile elongation at break and compression set were measured, and MFR and fuel permeability were evaluated by the above methods, and results of the measurements and evaluation are shown in Table 1.

**TABLE 1**

| | Ex. | | | | | | Com. Ex. | |
|---|---|---|---|---|---|---|---|---|
| | 1 | 2 | 3 | 4 | 5 | 6 | 1 | 2 |
| Composition (parts by weight) | | | | | | | | |
| Fluorine-containing ethylenic polymer (a) | 40 | 40 | 50 | 50 | 60 | 60 | 100 | |
| Fluororubber (b) | 55 | 50 | 45 | 40 | 35 | 30 | | 100 |
| Fluorine-containing thermoplastic elastomer (C) | 5 | 10 | 5 | 10 | 5 | 10 | | |
| Crosslinking agent (D) | 1.19 | 1.09 | 0.98 | 0.89 | 0.76 | 0.65 | | 2.17 |
| Amount of crosslinking agent (D) based on 100 parts by weight of fluororubber (b) | 2.17 | 2.17 | 2.17 | 2.17 | 2.17 | 2.17 | | 2.17 |

| Evaluation results | | | | | | | | |
|---|---|---|---|---|---|---|---|---|
| Particle size of fluororubber (B) (µm) | 6 | 5 | 5 | 4 | 5 | 5 | - | - |
| Hardness JIS-A | 90 | 88 | 92 | 90 | 94 | 92 | - | 60 |
| MFR (g/10 min.) | 2.0 | 2.7 | 5.8 | 6.3 | 17.4 | 18.9 | 30 | - |
| Compression set (%) | 39 | 50 | 53 | 60 | 67 | 75 | - | 12 |
| Tensile strength at break (MPa) | 14 | 20 | 19 | 24 | 20 | 26 | 20 | 8 |
| Tensile elongation at break (%) | 280 | 325 | 330 | 345 | 335 | 335 | 300 | 270 |
| Fuel permeability (g·mm/m²·day) | 9.3 | 10.8 | 5.6 | 6.3 | 3.5 | 3.9 | 0.9 | 67 |

### INDUSTRIAL APPLICABILITY

The thermoplastic polymer composition of the present invention is flexible and excellent in moldability and has excellent heat resistance, chemical resistance and oil resistance, since the thermoplastic polymer composition comprises a fluororesin, a crosslinked fluororubber and a fluorine containing thermoplastic elastomer.

## Claims

1. A thermoplastic polymer composition comprising a fluororesin (A) containing a fluorine-containing ethylenic polymer (a), a crosslinked fluororubber (B) in which at least a part of at least one kind of fluororubber (b) is crosslinked, and a fluorine-containing thermoplastic elastomer (C).

2. The thermoplastic polymer composition of Claim 1, wherein the crosslinked fluororubber (B) is obtained by crosslinking the fluororubber (b) dynamically in the presence of the fluororubber (A), the fluorine-containing thermoplastic elastomer (C) and a crosslinking agent (D) under melting conditions.

3. The thermoplastic polymer composition of Claim 1 or 2, wherein a melting point of the fluorine-containing ethylenic polymer (a) is 150° to 310°C.

4. The thermoplastic polymer composition of any of Claims 1 to 3, wherein the fluorine-containing thermoplastic elastomer (C) comprises at least one kind of elastomeric polymer segment (c-1) and at least one kind of non-elastomeric polymer segment (c-2), and at least either of the elastomeric polymer segment (c-1) and the non-elastomeric polymer segment (c-2) is a fluorine-containing polymer segment.

5. The thermoplastic polymer composition of any of Claims 1 to 4, wherein the fluorine-containing thermoplastic elastomer (C) comprises:
(1) a di-block polymer comprising one elastomeric polymer segment (c-1) and one non-elastomeric polymer segment (c-2), in which either of them is a fluorine-containing polymer segment; and/or
(2) a tri-block polymer comprising one elastomeric polymer segment (c-1) and two non-elastomeric polymer segments (c-2), in which either of them is a fluorine-containing polymer segment.

6. The thermoplastic polymer composition of Claim 4 or 5, wherein the elastomeric polymer segment (c-1) is a copolymer of tetrafluoroethylene, vinylidene fluoride and hexafluoropropylene, and the non-elastomeric polymer segment (c-2) is a copolymer of tetrafluoroethylene and ethylene.

7. The thermoplastic polymer composition of any of Claims 1 to 6, wherein the fluororubber (b) is at least one kind of rubber selected from the group consisting of a vinylidene fluoride/hexafluoropropylene fluororubber, a vinylidene fluoride/tetrafluoroethylene/hexafluoropropylene fluororubber and a tetrafluoroethylene/propylene fluororubber.

8. The thermoplastic polymer composition of any of Claims 1 to 7, wherein the fluorine -containing ethylenic polymer (a) is at least one polymer selected from the group consisting of:
(a-1) a copolymer of tetrafluoroethylene and ethylene,
(a-2) a copolymer of tetrafluoroethylene and a perfluoro ethylenically unsaturated compound represented by the following formula (1):
CF₂=CF-R_{f}¹ (1)
wherein R_{f}¹ represents -CF₃ or -OR_{f}² and R_{f}² represents a perfluoroalkyl group having 1 to 5 carbon atoms,
(a-3) a copolymer comprising 19 to 90 % by mole of a tetrafluoroethylene unit, 9 to 80 % by mole of an ethylene unit and 1 to 72 % by mole of a perfluoro ethylenically unsaturated compound unit represented by the following formula (1):
CF₂=CF-R_{f}¹ (1)
wherein R_{f}¹ represents -CF₃ or -OR_{f}² and R_{f}² represents a perfluoroalkyl group having 1 to 5 carbon atoms, and
(a-4) polyvinylidene fluoride.

9. The thermoplastic polymer composition of any of Claims 2 to 8, wherein the crosslinking agent (D) is at least one kind of compound selected from the group consisting of organic peroxides, amine compounds and hydroxy compounds.

10. The thermoplastic polymer composition of any of Claims 1 to 9 which has a structure having a continuous phase formed by the fluororesin (A) and a dispersion phase formed by the crosslinked fluororubber (B).

11. The thermoplastic polymer composition of Claim 10, wherein the crosslinked fluororubber (B) has an average particle size of dispersed rubbers of 0.01 to 30 µm.

12. The thermoplastic polymer composition of any of Claims 1 to 11, wherein an amount of the fluorine-containing thermoplastic elastomer (C) is 2 to 100 parts by weight based on 100 parts by weight of the fluororesin (A).

13. A molded article comprising the thermoplastic polymer composition of any of Claims 1 to 12.

14. A sealing material comprising the thermoplastic polymer composition of any of Claims 1 to 12.

15. Peripheral parts of fuel system comprising the thermoplastic polymer composition of any of Claims 1 to 12.

16. A single layer fuel hose comprising the thermoplastic polymer composition of any of Claims 1 to 12.

17. A single layer fuel container comprising the thermoplastic polymer composition of any of Claims 1 to 12.

18. A multilayer fuel hose comprising the thermoplastic polymer composition of any of Claims 1 to 12.

19. A multilayer fuel container comprising the thermoplastic polymer composition of any of Claims 1 to 12.
